Europäisches Patentamt

European Patent Office

Office européen des brevets

(11) Veröffentlichungsnummer: **0 279 808**
**A2**

## (12) EUROPÄISCHE PATENTANMELDUNG

(21) Anmeldenummer: 88890032.1

(22) Anmeldetag: 16.02.88

(51) Int. Cl.⁴: **B 29 C 43/52**
B 29 C 43/02
//B29K105:12,B29L31:50

(30) Priorität: 16.02.87 AT 316/87

(43) Veröffentlichungstag der Anmeldung:
24.08.88 Patentblatt 88/34

(84) Benannte Vertragsstaaten:
AT BE CH DE ES FR GB GR IT LI LU NL SE

(71) Anmelder: ISOSPORT VERBUNDBAUTEILE Ges.m.b.H.
Industriestrasse 2
A-7000 Eisenstadt (AT)

(72) Erfinder: Köhler, Rolf
Ottensteinstrasse 82
A-2344 Maria Enzersdorf (AT)

Hahnekamp, Richard
Koglweg 14
A-7000 Eisenstadt (AT)

(74) Vertreter: Stampfer, Heinz
ISOVOLTA Österreichische Isolierstoffwerke AG
Industriezentrum-Süd
A-2351 Wiener Neudorf (AT)

(54) Verfahren zum Herstellen von Kunststoff-Formteilen.

(57) Bei einem Verfahren zur Herstellung von Formteilen aus einem gegebenenfalls mit Kurzfasern verstärktem thermoplastischen Kunststoff, werden Kunststoff-Plattenzuschnitte die eine Dicke zwischen 1 bis 12 mm haben, auf eine Verarbeitungstemperatur gebracht, bei der sie zwar plastisch aber an ihrer Oberfläche nicht oder zumindest noch nicht wesentlich klebrig sind. Die heißen Plattenzuschnitte werden kann in die Matrize (3) einer auf Temperaturen unterhalb der Vicat-Erweichungstemperatur des Kunststoffes gehaltenen Form eingebracht, und durch Eintauchen der Form-Patrize (6) in die Matrize (3) die Form geschlossen und der Formraum (11) mit dem Kunststoff vollständig gefüllt wird. Nach seinem Abkühlen und Verfestigen wird der Kunststoff dann als Formteil (10) aus der Form ausgebracht. Dabei können die auf Verarbeitungstemperatur gebrachten Plattenzuschnitte vor ihrem Einbringen in die Matrize (3) auch zu einem Kunststoffstück (7) größerer Dicke ein- oder mehrfach gefaltet und/oder eingerollt werden.

Das Verfahren eignet sich speziell auch zum Herstellen von Skischuh-Außenschalen.

**Beschreibung**

## Verfahren zum Herstellen von Kunststoff-Formteilen

Die Erfindung betrifft ein Verfahren zum Herstellen von Formteilen aus einem gegebenenfalls mit Kurzfasern verstärktem thermoplastischen Kunststoff.

Ein übliches Verfahren zum Herstellen von Formteilen aus thermoplastischen Kunststoffen ist der Spritzguß. Um für Spritzguß geeignet zu sein, muß sich das thermoplastische Material zunächst bei der gewählten Verarbeitungstemperatur mit Hilfe eines Schneckenextruders extrudieren lassen. Dabei hängt für einen bestimmten thermoplastischen Kunststoff die Spritzgußfähigkeit von seinem Molekulargewicht ab. Viele solcher Kunststoffe sind nämlich ab einem bestimmten höheren mittleren Molekulargewicht nicht mehr durch Spritzguß verarbeitbar. Ob ein bestimmter Formteil dann aber tatsächlich durch Spritzguß hergestellt werden kann, hängt darüber hinaus noch von der Art des Formteils bzw. der Ausgestaltung des Spritzwerkzeuges ab, d.h. ob nur eine oder mehrere Anspritzstellen vorgesehen sind, bzw. welche maximalen Fließwege beim Spritzvorgang zurückgelegt werden müssen. Relativ lange Fließwege führen nun aber speziell bei relativ dünnen Wandstärkten zu hohen Schergeschwindigkeiten im gespritzten Material, was sich wieder in nicht unwesentlichen Inhomogenitäten und Ansitropien im Spritzgußstück auswirken kann. Obwohl die Zykluszeiten für den Spritzguß im allgemeinen relativ niedrig sind, können sie insbesondere wenn des Formteil stellenweise dicke Wandungen bzw. sonstige Material-Ansammlungen aufweist, doch recht beträchtlich sein und bis zu 300 s und mehr betragen.

Hier will die Erfindung Abhilfe schaffen. Die Erfindung, wie sie in den Ansprüchen gekennzeichnet ist, löst die Aufgabe, ein Verfahren zum Herstellen von Formteilen aus einem gegebenenfalls mit Kurzfasern verstärktem thermoplastischen Kunststoff anzugeben, mit dem man Formteile herstellen kann, zu deren Herstellung - bei gleichem Kunststoff und gleicher Form - das Spritzgußverfahren versagt oder nur schwierig zu realisieren ist, und mit dem insbesondere bei Formteilen mit dicken Wandstärken mit kleineren Zykluszeiten gearbeitet werden kann als bei Spritzguß.

Die Erfindung wird nun anhand der Figuren, welche das erfindungsgemäße Verfahren anhand der Herstellung der Außenschale eines Skischuhs illustrieren, näher erläutert.

Als Material zur Herstellung dieser Skischuh-Außenschale dient ein thermoplastischer Kunststoff bestehend aus z.B. 20 Gew.% eines thermoplastischen Polyurethans (PU) und 80 Gew.% von Acrylnitrilbutadienstyrol (ABS) und 2 Gew.% eines Pigments. Aus diesem Gemisch, das einen Schmelzindex MFI 190/5 = 0,4 g/ 10 min aufweist, werden nun durch Extrusion und nachfolgender Kalandrierung 6 mm dicke Platten hergestellt, welche man in rechteckige Plattenzuschnitte, die jeweils dieselben Masse wie der herzustellende Formteil aufweisen, unterteilt.

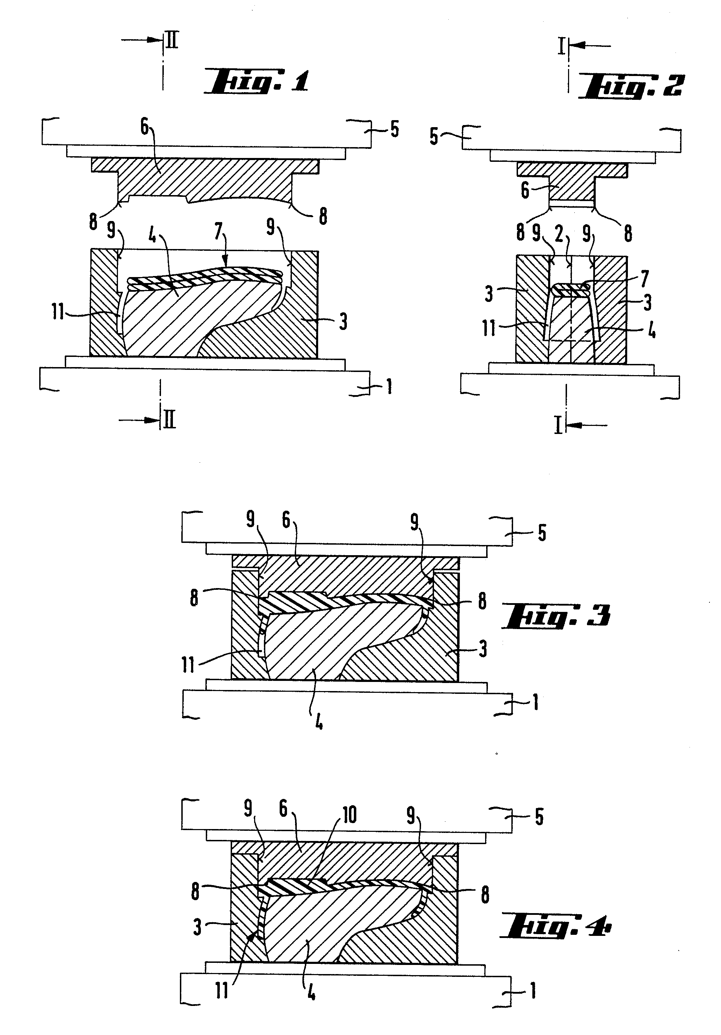

Fig. 1 zeigt die bei der Herstellung des Formteils zur Verwendung gelangende Preßform schematisch im Schnitt längs der Linie I-I von Fig. 2, Fig. 2 einen dazu senkrecten Schnitt längs der Linie II-II von Fig. 1.

Auf dem unteren Preßtisch 1 einer Presse ist eine längs der Symmetrieebene 2 (siehe Fig. 2 ) teilbare Matrize 3 montiert, innerhalb von der ein Formkern 4 angeordnet ist. Der obere Preßtische 5 trägt die zur Form gehörende Patrize 6. Die aus Matrize 3, Formkern 4 und Patrize 6 bestehende Form wird durch entsprechende Heiz- bzw. Kühl einrichtungen auf einer Temperatur von 60°C gehalten.

Zur Herstellung des als Skischuh-Außenschale dienenden Formteils werden nun die Kunststoff-Plattenzuschnitte in einem Durchlaufofen auf ca. 200°C aufgeheizt und mit dieser Temperatur zur Verarbeitung bereitgehalten. Die heißen Plattenzuschnitte, die bei dieser Temperatur plastisch aber an ihrer Oberfläche noch nicht klebrig sind, werden nun jeweils dem Durchlaufofen entnommen, einmal um eine Mittellinie zu einem Kunststoffstück 7 gefaltet, das nun in die Matrize 3 eingebracht wird. Der ganze Vorgang der Entnahme des heißen Plattenzuschnitts aus dem Ofen, der Faltung sowie das Einlegen des gefalteten Kunststoffstücks 7 in die Matrize 3 erfolgt händisch unter Verwendung von Schutzhandschuhen oder auch maschinell und nimmt nur wenige Sekunden in Anspruch.

Unmittelbar nach dem Einbringen des heißen Kunststoffstücks 7 in die Matrize 3, wird die Form durch Absenken des oberen Preßtisches 5 geschlossen, wobei die Patrize 6 in die Matrize 3 eintaucht und die Kanten 8 der Patrize 6 an der Innenwand 9 der Matrize 3 im geringen Abstand entlanggleiten. Während des Schließvorganges wird das Material des Kunststoffstücks 7 über den Formraum 11 verteilt.

Die Figuren 3 und 4 zeigen - in analogen Darstellungen wie Fig. 1 - in Fig. 3 die noch nicht ganz geschlossene Form und in Fig. 4 die geschlossene Form, deren Formraum 11 nun vollständig und gleichmäßig mit dem thermoplatischen Kunststoff gefüllt ist. Nach etwa 25 s ist der Kunstoff auf etwa die Entformungstemperatur abgekühlt. Dann wird obere Preßtisch 5 mit der Patrize 6 hochgefahren, die Matrize 3 geteilt und das nun fertige Formteil 10, das auf dem Formkern 4 aufsitzt, von diesem unter elastischer Verformung abgezogen.

Im Gegensatz zu Formteilen, die durch Spritzguß hergestellt sind, ist bei dem erfindungsgemäßen hergestellten Formteilen wegen des Fehlens von Angüssen keinerlei Nachbearbeitung erforderlich. Die bei dem vorstehend beschriebenen Verfahrensbeispiel erreichten Zykluszeiten betrugen etwa 40 s, während bei der Herstellung derselben Skischuh-Außenschale durch Spritzguß die Zykluszeiten sich mit etwa 120 s auf ein Mehrfaches davon beliefen. Dies hat u.a. seinen Grund darin, daß die Verarbeitungstemperaturen bei Spritzguß wesentlich höher und damit die zur Abkühlung der Spritzgußstücke erforderlichen Schließzeiten der Form wesentlich länger sind als die entsprechende Werte bei dem erfindungsgemäßen Verfahren. Insgesamt ist im vorliegenden Fall bei gleich hoher Produktionsmenge der verfahrenstechnische Aufwand bei einer Formteilherstellung durch Spritzguß wesentlich höher als beim erfindungsgemäßen Verfahren. Schließlich werden bei dem erfindungsgemäßen Verfahren beim Füllen der Form mit dem Kunststoff auch bei langen Fließwegen im allgemeinen nicht so hohe Schergeschwindigkeiten erreicht als beim Spritzgüß, wodurch im Formteil eine höhere Gleichmaßigkeit und geringere Anisotropie des Materials erzielt wird, als bei gleichartigen Spritzgußteilen erreicht werden kann.

Die Verwendung von Plattenzuschnitten aus einem Gemisch aus zwei verschiedenen Kunstsoffen unterschiedlicher Vicat-Erweichungstemperatur hat den Vorteil, daß dabei in vielen Fällen durch Variation des Mischungsverhältnisses für die Herstellung eines bestimmten Formteils diese Vicat-Erweichungstemperatur optimiert werden kann. Bei einer Mischung aus PU und ABS kann z.B. durch Erhöhung des ABS-Gehaltes die VicatErweichungstemperatur des Kunststoff-Gemisches erhöht werden, bzw. umgekehrt.

Außer mit PU und ABS sowie mit einem Gemisch aus diesen beiden konnte das erfindungsgemäße Verfahren noch mit folgenden thermoplastisichen Kunststoffen erfolgreich realisiert werden: Polyäthylen (PE), Polypropylen (PP), Polyäthylenterephthalat (PETP), Polyamid (PA) mit und ohne Glaskurzfaserverstärkung und Polystyrol.

### Patentansprüche

1. Verfahren zum Herstellen von Formteilen (10) aus einem gegebenenfalls mit Kurzfasern verstärken thermoplastischen Kunststoff, dadurch gekennzeichnet, daß Plattenzuschnitte aus dem Kunststoff, die eine Dicke zwischen 1 bis 12 mm haben, auf eine Verarbeitungstemperatur gebracht werden, bei der sie zwar plastisch aber an ihrer Oberfläche nicht oder zumindest noch nicht wesentlich klebrig sind, daß ein oder mehrere solcher Zuschnitte in die Matrize (3) einer auf Temperaturen unterhalb der Vicat-Erweichungstemperatur des Kunststoffs gehaltenen Form eingebracht werden, daß durch Eintauchen der Form-Patrize (6) in die Matrize (3), bei welchen die Patrizenkanten (8) an der Innenwand (9) der Matrize (3) entlanggleiten, die Form geschlossen und der Formraum (11) mit dem Kunststoff gefüllt wird und daß nach Abkühlen des Kunststoffes und dessen Verfestigung er als Formteil (10) aus der Form ausgebracht wird.

2. Verfahren nach Anspruch 1, dadurch gekennzeichnet, daß die auf Verarbeitungstemperatur gebrachten Plattenzuschnitte vor ihrem Einbringen in die Matrize (3) zu einem Kunststoffstück (7) größerer Dicke ein- oder mehrfach gefaltet und/oder eingerollt werden.

3. Verfahren nach Anspruch 1 oder 2, dadurch gekennzeichnet, daß der kunststoff der eingesetzten Plattenzuschnitte zumindest überwiegend aus einem thermoplastischen Polyurethan oder aus Acrylnitrilbutadienstyrol oder aus einem Gemisch aus diesen beiden besteht.

4. Verfahren nach Anspruch 3, dadurch gekennzeichnet, daß der Polyurethananteil am eingesetzten Kunststoff zwischen 20 und 80 Gew.% und sein Anteil an Acrylnitrilbutadienstyrol zwischen 80 und 20 Gew.% beträgt.

5. Verfahren nach einem der Ansprüche 1 bis 4, dadurch gekennzeichnet, daß es zur Herstellung elnes Skischuhbauteils eingesetzt wird.

Fig. 1

Fig. 2

Fig. 3

Fig. 4